# EUROPEAN PATENT SPECIFICATION

(11) **EP 2 552 771 B1**
(45) Date of publication and mention of the grant of the patent: **30.04.2014**
(21) Application number: 11720890.0
(22) Date of filing: 31.03.2011
(51) Int. Cl.: B63B 35/50, B66F 7/08

(54) **ACTIVE PLATFORM FOR THE LANDING OF AN AIRCRAFT ON AN ACCESS FACILITY**
AKTIVE PLATTFORM ZUR LANDUNG VON FLUGGERÄTE AUF ZUGANGSANLAGEN
PLATEFORME ACTIVE POUR L'ATTERRISSAGE D'UN AÉRONEF SUR UNE INSTALLATION D'ACCÈS

(30) Priority: 02.04.2010 IT VI20100093
(43) Date of publication of application: 06.02.2013
(73) Proprietor: B. Financial S.r.L., 24067 Sarnico (BG) (IT)
(72) Inventor: BESENZONI, Giovanni, 24067 Sarnico (BG) (IT)
(74) Representative: Burchielli, Riccardo
(86) International application number: PCT/IT2011/000097
(87) International publication number: WO 2011/135599

(56) References cited:
- FR-A1- 2 912 159
- GB-A- 2 353 272
- GB-A- 2 440 520
- NL-C2- 1 032 548
- US-A- 4 883 388
- US-A- 4 917 329

## Description

The current invention concerns an active platform for the landing of an aircraft on an access facility, such as, by way of illustrative but non exclusive way, a sport craft.

It is known that the modern sport boats, capable to reach sometimes relevant lengths, in the order of tens of meters, are equipped with a platform that allows the landing of a aircraft, for example in case there is a need to transport to another place a person on board or welcome guests on board when the boat is at open sea.

The platform mounted aboard a boat presents specific structural and functional features, suitable to comply with the regulations in force regarding, for example, the safety for the aircraft pilot during landing: these regulations relate, in particular, to the overall dimensions and visibility of the classic symbol "H" printed on the upper part, and the circle surrounding it.

Currently, the landing platforms are generally mounted at the bridge of the boat, located in the middle part placed at the top, better known in nautical jargon with the term "*fly*", which houses the command post.

The current construction concept of the platforms concerned provides that they are firmly fixed in the position identified above, constantly occupying the entire space allocated to them on the boat and always remaining visible outside the operating position useful to allow the proper and safe aircraft landing on them.

The platforms currently installed on boats allow an aircraft to land directly on them in an effective and in some ways convenient, even considering that the manoeuvre is tricky and complicated by the unstable nature of the support surface, such as water, on which the access facility is placed floating, up to the point to preferably require a skilled and experienced pilot. For example, a landing platform for aircrafts having the technical features of the preamble of the appended claim 1 is known from FR2912159A1. However, the platforms of the known technique used for the landing of an aircraft on a boat and, more in general, on any access facility present the recognized drawback of being rather difficult and even dangerous to be accessed for the pilot and the possible crew if, during the landing phase, critical weather conditions persist or the access facility itself is subjected to bumps of adjacent masses, structures or bodies.

In case of boats, in particular, weather conditions of strong wind increases, as well known, the wave that breaks in even violent and, however, invasive against the side of the hull, thereby causing even marked and evident rolling and/or pitching fluctuations and, more generally, making the access facility rather unstable.

Under such conditions, these platforms keep with difficulty and for short infinitesimal moments the proper position for landing the aircraft, namely that one that provides the platform according to a nearly horizontal plane, thus virtually making the landing manoeuvre rather difficult and dangerous, if not impossible, also for a highly experienced pilot.

The present invention aims to remedy such a drawback of the prior art.

In particular, primary purpose of the invention is to provide an active platform for the landing of an aircraft, in this case a helicopter, on a access facility which is substantially stable or at least more stable than the equivalent platforms of the prior art even in presence of phenomena and/or critical external events, such as adverse weather conditions and/or adjacent structures colliding with the access facility itself.

Within such a purpose, it is a task of the present invention to devise an active platform for the landing of an aircraft on an access facility which allows the pilot of the aircraft to perform the landing manoeuvre (and of course the take-off) more easier and more safely than the current state of the art, especially when the facility is exposed to external atmospherics, such as bad weather, strong wind and/or an accidental bumps with other adjacent structures.

It is a last but not least purpose of the invention to give body to an active platform for the landing of an aircraft on access facility which can be effectively and conveniently mounted in any area of the access facility, in case the latter is divided into several sections of various composition, such as fro instance a boat.

Said purposes are achieved through an active platform for the landing of an aircraft on an access facility as the attached claim 1; as hereinafter referred for the sake of brevity.

Other constructive features of detail of the active platform of the invention are set forth in the dependent claims.

Advantageously, the active platform of the invention is able to keep the upper landing footboard constantly and firmly in a horizontal position, ideal so that the pilot lands on the access facility in an effective way and in maximum safety conditions both fro people on board and the structural integrity of the aircraft.

This is due to the compensation and levelling means which, together with the moving means with which are operatively connected, make the platform of the invention a mechanical self-levelling system and active, able to continuously adapt to the phenomena and/or external events that significantly and critically interfere with the access facility.

Still advantageously, when the access facility is a boat, the active platform of the invention is marked by a limited rolling and/or pitching fluctuation even in presence of bad weather conditions that increase the wave of the support surface on which the boat insists.

Such an aspect is crucial especially when an aircraft must land on the boat at open sea.

Equally advantageously, the active platform of the invention can be used by people in a completely safe and comfortable as sun deck or support of any item plane when it is not in the intended use and, therefore, for most of the day time.

In advantageous manner, furthermore, the active platform of the invention have no installation constraint and can be placed in any area of the access facility; in particular, when the access facility is represented by a boat, the active platform object of the present invention is installable both at prow and at stern or at command bridge (fly).

These purposes and advantages, as well as others that will emerge below, will better result from the description that follows, relating to a preferred embodiment of the active platform of the invention, given as indicative and illustrative, but not limiting, way by reference to the attached drawing tables, where:
- figure 1 is an assonometric view of the active platform of the invention in application and operating conditions;
- figures 2 and 3 are two different assonometric views of active platform of figure 1 in the same operating position;
- figure 4 is a simplified assonometric view of the platform of the previous figures in another operating position;
- figure 5 is a side view of figure 4;
- figure 6 is a simplified view of figure 4;
- figure 7 is a plan view of figure 6;
- figure 8 is the view of figure 7 according to the cutting plane B-B;
- figure 9 is the view of figure 7 according to the cutting plane C-C.

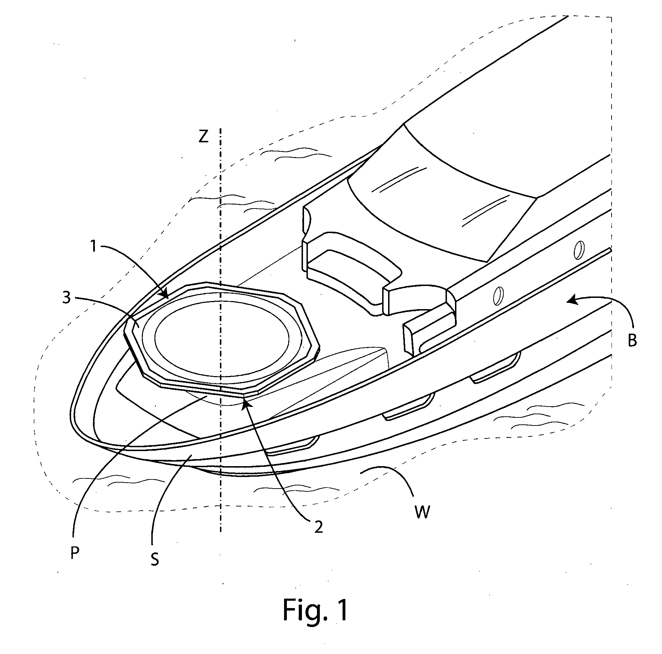

The active platform of the invention is shown in figure 1 where it is globally indicated with 1.

It is mostly suitable to the landing of an aircraft, usually a helicopter, on a boat B such as a yacht or super yacht, visible in figure 1.

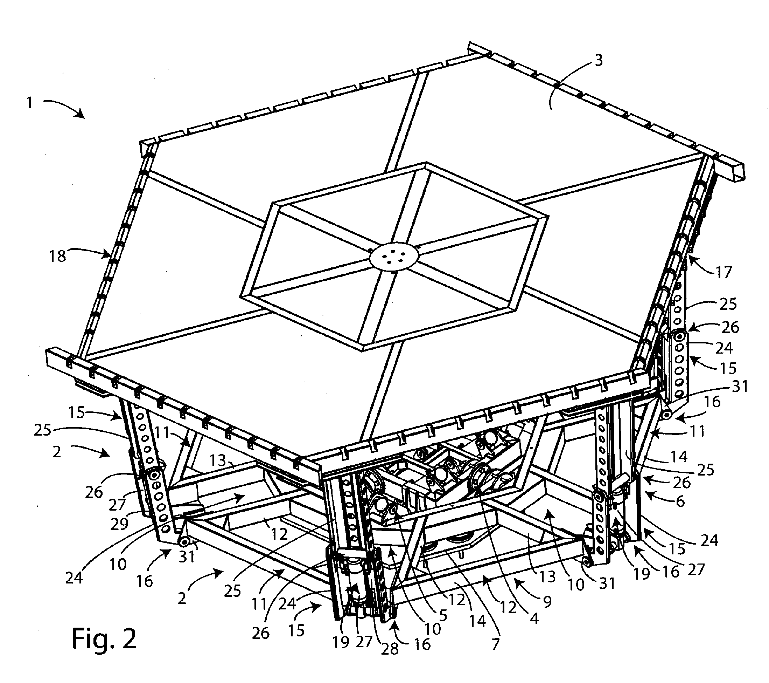

As it can be seen, the active platform 1 comprises:
- a support basement, which is visible from figure 2 where it is overall marked with 2, which, in application conditions, firmly insists on a reference surface P defined, by way of example, at the prow of the boat B;
- a landing footboard 3, superiorly connected with the support basement 2 and suitable to receive the aircraft for parking over the boat B.

In accordance with the invention, the active platform 1 includes compensation and levelling means, on the whole indicated with 4, operatively connected with moving means, on the whole numbered with 5, so as to constantly keep the landing footboard 3 on a substantially horizontal plane when atmospheric agents, fluid masses and/or adjacent structures interfere with the access facility B.

In this case, the compensation and levelling means 4 act, due to the operation of the moving means 5, so as to keep the landing footboard 3, however, parallel to the waterline W of the boat B.

Moreover, since the access facility is a boat B, the atmospheric agents are, for example, wind or stricken rain, while the fluid masses are represented by the swell of the wave of a rough sea or lake.

The compensation and levelling means 4 and the moving means 5 are in this case coupled with the support basement 2 so as to be below the landing footboard 3.

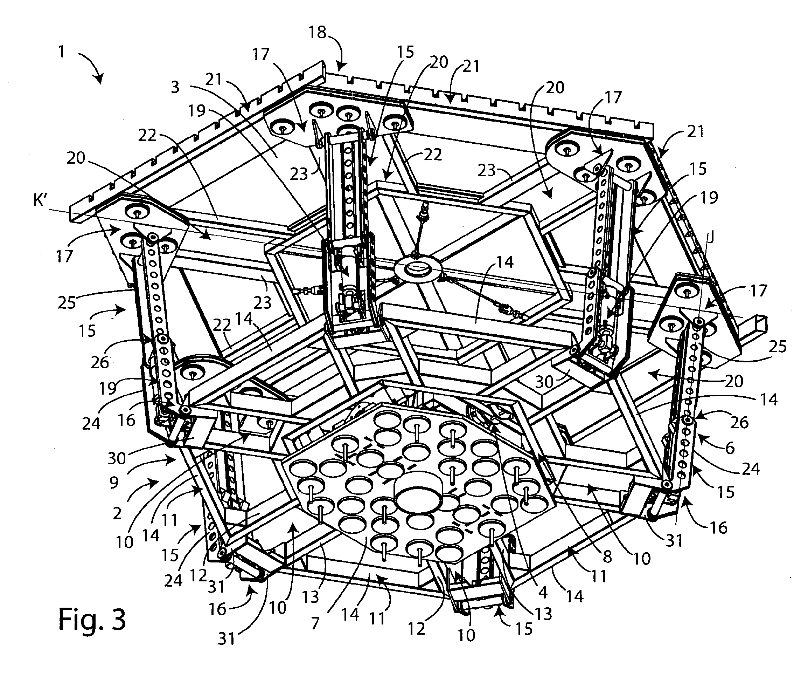

Advantageously, the active platform 1 also comprises translation means, overall indicated with 6, interposed between the support basement 2 and the landing platform 3 in order to connect them together, as better shown by the figures 2 and 3.

The translation means 6 are operatively connected with the landing footboard 3 in order to move it from/to a rest position, in which the landing footboard 3 re-enters with respect to the access facility B along a vertical axis Z orthogonal to the waterline W, remaining arranged under the open sky and accessible to the user, to/from an operating position in which the landing footboard 3 fully protrudes from the access facility B according such a vertical axis Z, becoming available for the landing of the aircraft. More specifically, in the rest position, the landing footboard 3 re-enters completely, along the vertical axis Z, in the overall dimensions defined by the hull S of the boat B so that the landing footboard 3 itself can be used as a sun deck plane by the user, standing or lying down.

In a preferred but not exclusive way, the support basement 2 includes a base plate 7, which is attached to the reference surface P of the access facility B, and a central frame 8, placed above the base plate 7 with which is coupled through the compensation and levelling 4 and defining a lower plane parallel and spaced part from the base plate 7.

In this case, the support basement 2 also comprises a perimetric frame 9 surrounding the central frame 8 to which is coplanar.

The perimetric frame 9 is connected with the central frame 8 by the compensation and levelling means 4 and is provided with a cantilevered peripheral portion 9a.

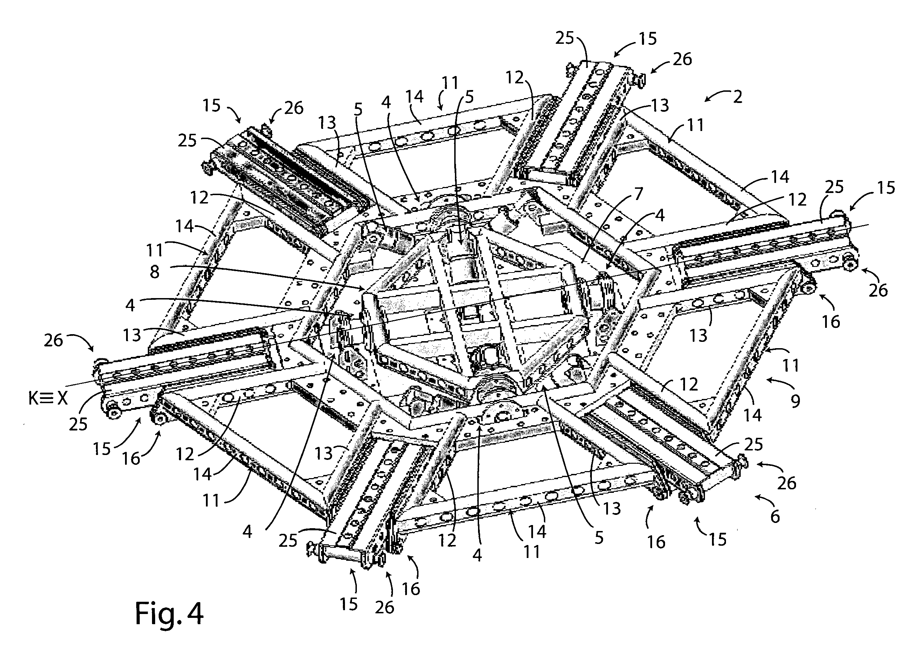

Figures 3 and 4 show that the perimetric frame 9 preferably has a star-shaped profile and defines a plurality of peripheral seats 10 facing radially outwardly, uniformly distributed on the perimetric frame 9 itself and staggered among-them by trapezoidal segments 11.

In this case, by pure illustrative way, the peripheral seats 10 are six in number, distributed on the perimetric frame 9 substantially in accordance with the vertices of a hexagon.

Each of the trapezoidal segments 11 just mentioned (in the present example six in number too) include two oblique section bars 12, 13, laterally delimiting the peripheral seats 10, and a longitudinal bar 14, facing outwardly and connected with the section bars 12, 13 in order to form the major base of each trapezoidal segment 11.

In particular, a first oblique section bar 12 of each trapezoidal segment 11 contribute to define a given peripheral seat 10, while the second oblique section bar 13 of the same trapezoidal segment 11 contributes to define the adjacent peripheral seat 10.

Figure 4 shows that in the rest position of the landing footboard 3, the translation means 6 are substantially contained in the peripheral seats 10 of the perimetric frame 9 assuming a configuration which defines a radial direction K.

In the operating position of the landing footboard 3, shown in figures 2 and 3, instead, the translations means 6 protrude upwardly according to an oblique direction J which forms an angle slightly higher than the right angle with the radial direction K.

Preferably but not necessarily, the translation means 6 include:
- a series of articulated arms, each of which indicated overall with 15 and coupled with:
   - the perimetric frame 9 through first constraint means, as a whole numbered with 16and placed at the peripheral seats 10, on one hand,
   - through second constraint means, indicated as a whole with 17, an upper stellar frame 18 which supports from beneath the landing footboard 3 and, in the rest position of the latter shown in figure 4, is placed parallel and superiorly close to the perimetric frame 9 itself along a substantially horizontal plane, on the other hand;
- a series of linear actuation members, each of which indicated with 19, cooperating with the respective articulated arms 15 in order to move the landing footboard 3 between the rest position and the operating position and vice versa and operatively connected with control means at user's disposal, not shown and constituted, for example, by a hydraulic gearcase provided with a control and process unit.

By virtue of the preferred construction concept of the perimetric frame 9 yet described, the articulated arms 15 and the related linear actuation means 19 are six in number, always by way of indicative example.

The stellar frame 18 presents a plurality of closed-profile peripheral compartments 20, uniformly distributed on it according to the vertices of a hexagon and according to radial lines K' parallel to the radial direction K, as well as staggered each other by trapezoidal sectors 21.

Even the trapezoidal sectors 21 are six in number in the case at issue, equal to the number of the trapezoidal segments 11.

Each of the trapezoidal sectors 21 is provided with oblique section bars 22, 23 laterally delimiting the peripheral compartments 20.

More properly, a first oblique section bar 22 of each trapezoidal sector 21 contributes to define a given peripheral compartment 20, while the second oblique section bar of each trapezoidal sector 21 contributes to define the adjacent peripheral compartment 20.

In the rest position of the landing footboard 3, the peripheral compartments 20 and 21 and the trapezoidal sectors of the stellar frame 18 substantially face respectively the peripheral seats 10 and the trapezoidal segments 11 of perimetric frame 9, as it can be again derived from figure 4.

Figures 2-3 illustrate that, in preferred but not exclusive manner, each articulated arm 15 comprises:
- a first protection plate 24 which contains one of the linear actuation members 19 and is revolvingly connected with the perimetric frame 9 through the first constraint means 16;
- a second protection plate 25 revolvingly connected with the upper stellar frame 18 through the second constraint means 17 and with the first protection plate 24 through third constraint means, collectively referred with 26.

In the rest position of the landing footboard 3, the second plate 25 is, therefore, contained in the first plate 24 so that each linear actuation member 19 is enclosed in these protection plates 24, 25, according to what figure 4 shows.

Preferably, any linear actuation member 19 is provided with an outer jacket 27, fixed to the bottom 28 of the first plate 20, and a power stem 29 connected with a support plate 30 contained in each of peripheral seats 10 and integral to the perimetric frame 9 through a pair of anchoring brackets 31 opposite and spaced apart each other.

In the rest position of the landing footboard 3, the power stem 29 protrudes axially from the outer jacket 27 up to the end-of-stoke, so that the longitudinal axis of the power stem 29 coincides with the radial direction K.

In the operating position of the landing footboard 3, the power stem 29 re-enters inside the outer jacket 27 up to the end-of-stroke, so that the longitudinal axis of the power stem 29 coincides with the oblique direction J.

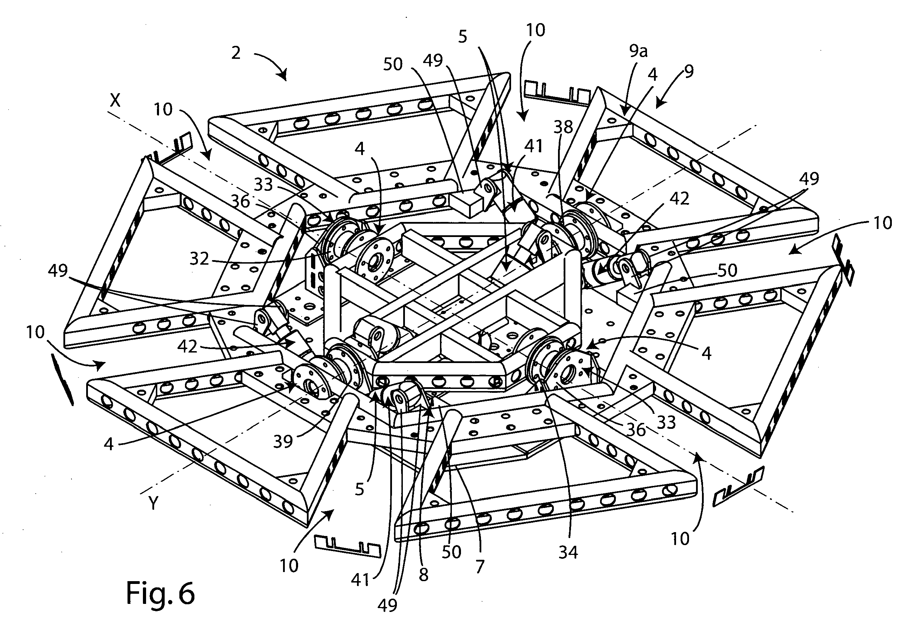

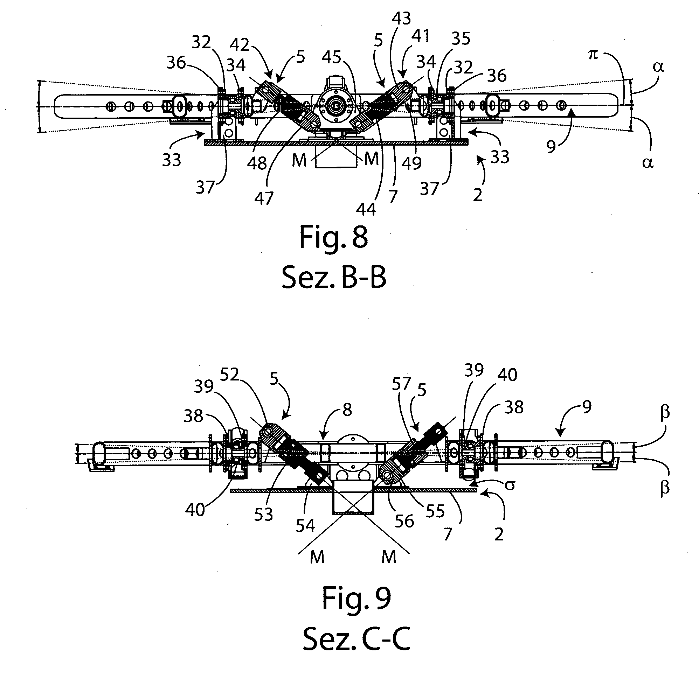

According to the preferred embodiment of the invention described herein, the compensation and levelling means 4 include two pairs of main mechanical couplings of the fifth wheel/shaft type, shown in the figures 4-7, each of which consisting of:
- a first rotation fifth wheel 32 fixed to the base plate 7 through anchoring means, overall indicated with 33;
- a first counter-fifth wheel 34, directly facing and opposite to the first rotation fifth wheel 32, revolvingly coupled at one side with the central frame 8 and at the other side with the first rotation fifth wheel 32 through a first articulation pin 35, better visible in figure 8, which allows the landing footboard 3 to oscillate around the longitudinal axis X passing through the centre of the central frame 8.

In particular, the first fifth wheel/shaft coupling (formed by a first rotation fifth wheel 32, a first counter-fifth wheel 34 directly facing and opposite thereto and a first articulation pin 35) is separated by means of the central frame 8 from the second fifth wheel/shaft coupling (formed by a second rotation fifth wheel 32, a second counter-fifth 34 facing and opposite to the latter and a second articulation pin 35).

The anchoring means 33 comprise a shaped plate 36 orthogonally projecting from the base plate 7 and a pair of reinforcing ribs 37 coupled with the side edges opposite each other of the shaped plate 36.

Figure 8 shows also that the oscillation of the landing platform 3 allowed by the first articulation pin 35 describes acute angles α positive and negative with respect to a reference plane parallel Π parallel to the reference surface P and dividing into half the central frame 8.

Such an acute oscillation angle α of the landing footboard 3 around the longitudinal axis X takes values typically between 0° and 5°.

In advantageous but not binding manner, the compensation and levelling means 4 also include in this case a pair of auxiliary mechanical couplings of the fifth wheel/shaft type, each of which consisting of a second rotation fifth wheel 38, fixed to the perimetric frame 9, and a second counter-fifth wheel 39, directly facing and opposite to the second fifth wheel 38.

The second counter-fifth wheel 39 is, moreover, revolvingly coupled at one side with the central frame 8 and at the other side with the second fifth wheel 38 through a second articulation pin 40, better visible in figure 9, which allows the landing platform 3 to oscillate around a transverse axis Y passing through the centre of the central frame 8 orthogonally to the longitudinal axis X.

In accordance with the above relating to the main fifth wheel/shaft couplings, even the auxiliary fifth wheel/shaft couplings are mutually opposed and separated from the central frame 8.

Moreover, as shown in figure 9, the oscillation of the landing footboard 3 allowed by the second articulation pin 40 describes acute angles ß positive and negative with respect to the reference plane Π: the value of such an acute angle β is preferably between 0° and 2°.

On the basis of the arrangement just described of the main fifth wheel/shaft couplings and the auxiliary fifth wheel/shaft couplings, they are uniformly spaced apart each other according to the vertices of a square. Since the current description has been directed to an active platform 1 installed, by way of preferred but not limiting example, on a boat B as access facility, the longitudinal axis X and the transverse axis Y respectively represent rolling axis and the pitching axis of the boat B itself. It is understood that in other embodiments of the invention, not shown, the main fifth wheel/shaft couplings of the compensation and levelling means, properly designed, may cause the landing platform to rotate around the transverse pitching axis of the boat; conversely, the auxiliary fifth wheel/shaft couplings will allow the landing platform to rotate around the longitudinal rolling axis of the boat itself.

As far as the moving means 5 are concerned, figures 4-7 show that they preferably include:
- a pair of first linear actuators 41, symmetrically arranged each other with respect to the centre of the central frame 8, placed between the latter and the perimetric frame 9 and operatively connected with the control means introduced before;
- a second pair of second linear actuators 42, symmetrically arranged each other with respect to the centre of the central frame 8, placed between the latter and the perimetric frame 9 and operatively connected with the control means.

More in detail, each of the second linear actuators 42 faces to and cooperates with one of the first linear actuators 41 so as to rotate the landing footboard 3 around the longitudinal axis X through the compensation and levelling means 4.

Figure 8 illustrates that each of the first linear actuators 41 is provided with an outer cylinder 43, constrained to the perimetric frame 9, and a thrust piston 44 constrained to a first support plate 45 coupled with the perimetric frame 9, and to a second support plate 46 coupled with the central frame 8 and facing the first support plate 45.

In turn, each of the second linear actuators 42 is provided with an outer cylinder 47, constrained to the support plates 45, 46 facing each other, and a thrust piston 48 constrained to the perimetric frame 9 so that the effect of the thrust piston 48 of the second linear actuators 42 balances the effect of the thrust piston 44 of the first linear actuators 41 facing and cooperating with the second linear actuators 42 at two sides of the central frame 8 symmetrically arranged with respect to the longitudinal axis X.

In particular, figures 4, 6 and 7 show that the second rotation fifth wheel 38 is interposed between the first support plate 45 and the perimetric frame 9, while the second support plate 46 is interposed between the second counter-fifth wheel 39 and the central frame 8.

In addition, the thrust piston 44 of the first linear actuators 41 and the outer cylinder 47 of the second linear actuators 42 are constrained to the support plates 45, 46 at the free appendix, not numbered, of the latter.

As it can be observed in figure 8, the free appendix of the support plates 45, 46 is facing and slightly spaced apart from the base plate 7.

In figure 8 it is shown that the thrust piston 48 of the second linear actuators 42 and the outer cylinder 43 of the first linear actuators 41 are constrained to a pair of strike wings 49 facing each other, protruding from an inner block 50 of the perimetric frame 9.

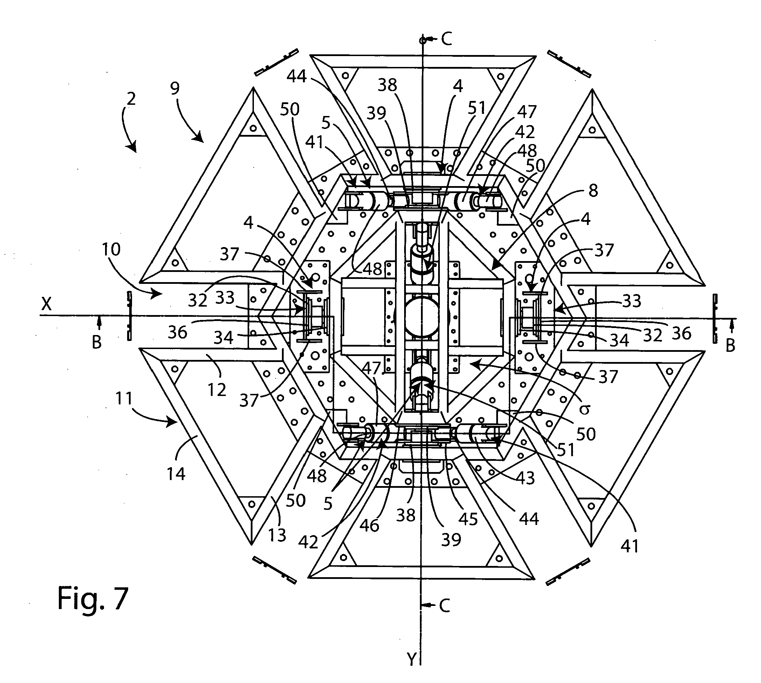

Form figure 7 it is derived in particular that each inner block 50 of the perimetric frame 9 is placed at the vertex of an imaginary rectangle defined between the central frame 8 and the perimetric frame 9.

In operating conditions, the thrust piston 44 and 48 of the first linear actuators 41 and the second linear actuators 42 slides along a linear axis M oblique to the plane σ defined by the base plate 7 and parallel to the longitudinal axis X when projected onto such a plane σ of the base plate 7. By way of pure preferred example, the moving means 5 comprise a pair of third linear actuators 51 facing and cooperating each other, symmetrically arranged with respect to the longitudinal axis X and coupled at one side with the central frame 8 and at the other side with the base plate 7 according to the transverse axis Y in order to rotate the landing footboard 3 around such a transverse axis Y always through the compensation and levelling means 4.

More specifically, as figure 9 shows, a first one of the third linear actuators 51 is provided with an outer cylinder 52, constrained to the central frame 8, and a thrust piston 53 constrained to a pair of first brackets 54 facing and spaced apart each other, protruding from the base plate 7 to which are fixed.

On the other hand, a second one of the third linear actuators 51 is provided with an outer cylinder 55, constrained to a pair of second brackets 56 facing and spaced apart each other, symmetrically arranged to the first brackets 54 with respect to the longitudinal axis X and protruding from the base plate 7 to which are fixed.

The second one of the third linear actuators 51 is also equipped with a thrust piston 57 constrained to the central frame 8 so that the effect of the thrust piston 53 and the thrust piston 57 of the respective third linear actuators 51 are mutually balanced.

Figures 4-9 highlight that the third linear actuators 51 are contained within the perimeter of the central frame 8, as well as the bore of the outer cylinders 52 and 55 of the third linear actuators 51 is larger than that one of the outer cylinders 43 and 47 of the first linear actuators 41 and the second linear actuators 42.

Advantageously, the active platform 1 comprises detection means, not represented and constituted for example by contact sensors, electrically connected with the control means and cooperating with the perimetric frame 9 in order to determine deviations of the landing footboard 3 from the horizontal position when atmospheric agents, fluid masses and/or adjacent structures interfere with the boat B.

As already said, the control means comprise a preferably hydraulic gearcase available to the user who operates the moving means 5 when the position of the perimetric frame 9 supporting the landing footboard 3, determined by the detection means, deviates from the ideal horizontal position taken as reference, reporting the landing footboard 3 in such a horizontal position suitable for a smooth and safe landing.

Operatively, the active platform 1 according to the invention is in the specific case mounted at prow P of the boat B where, when not in use for the landing and the temporary support of an aircraft, it advantageously becomes a sun deck and support plane accessible in complete safety by people.

In such a situation, indeed, the active platform 1 re-enters with respect to the hull S of the boat B even along the vertical axis Z.

When the aircraft should land on the boat B, the control means operate the driving of linear actuation members 19 of the translation means 6, which move the articulated arms 15 from the position of figure 4 to the position of figures 2 and 3, aligning them along the oblique direction J and consequently lifting the landing footboard 3 in the operating position, useful to receive the aircraft, horizontal and protruding from the hull S of the boat B along the vertical axis Z.

In presence of critical or however unfavourable weather conditions, such as strong wind or storm, the hull S of the boat B is exposed to even violent action of the rough wave-motion that moves the landing footboard 3 from the horizontal ideal operating position, thus complicating up to make the landing manoeuvre by the pilot of the aircraft almost impossible.

The active platform 1 of the invention exerts its advantage in such conditions, since the detection means immediately and with infinitesimal precision signal the control means any single deviation of the landing footboard 3 from the horizontal position.

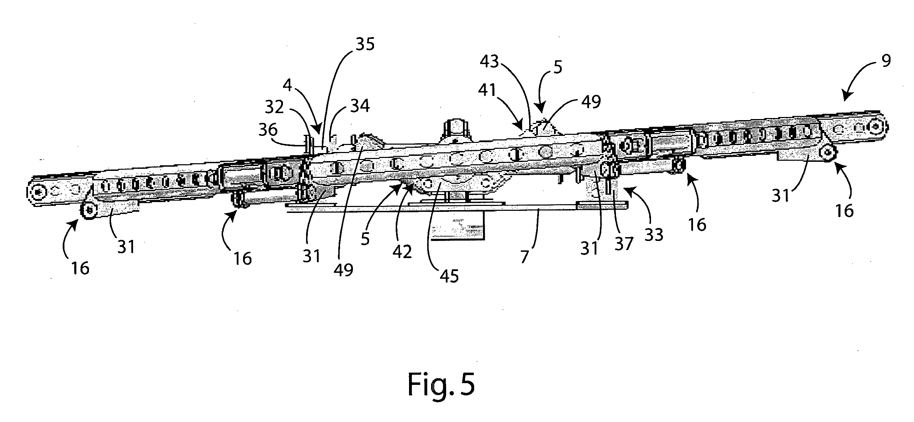

Through special computer program managed by the central processing and control unit of the control means, the moving means 5 and, conversely, the compensation and levelling means 4 bring with punctual and continuous adjustment the landing footboard 3 back in the horizontal position, ideal for the pilot manoeuvre of the aircraft, according to what figure 5 illustrates by way of example.

Such a figure 5 indicates the position of the landing footboard 3, ideal for aircraft landing, after rotation around the longitudinal axis X, whereby the plane defined by the landing footboard 3 is horizontal to the waterline W on which the boat B insists but incident the plane σ defined by the base plate 7.

In particular, the first linear actuators 41 and the second linear actuators 42 cause the rotation of the landing footboard 3 around the longitudinal rolling axis X when the waves of the wave-motion hit from starboard (right) or larboard (left) the hull S of the boat B.

Operation of the first linear actuators 41 and the second linear actuators 42 is synchronized by the control means and, in any case, provides that, at each side of the central frame 8, the effects of thrust pistons 44 and 48, coupled in opposite way to the same constructive components, reciprocally balance.

If the waves of the wave-motion interfere with the hull S of the boat B thereby causing even or just a pitching oscillation around the transverse axis Y, the control means operate the third linear actuators 51 which, thanks to the auxiliary fifth wheel/shaft couplings of the compensation and levelling means 4, contribute to restore or restore by themselves the horizontal position of the landing footboard 3.

The presence of the compensation and levelling means 4 guarantees, therefore, that the landing footboard 3 constantly keeps the horizontal position, ideal so that the pilot of the aircraft can perform the landing manoeuvre on the boat B with a certain confidence and the maximum safety.

From the description just made, it is understood, therefore, that the active platform for the landing of an aircraft on an access facility, object of the present invention, reaches the purposes and achieves the advantages mentioned above.

In execution, changes will be made to the active platform of the invention resulting, for example, in a support basement having a different constructive concept from that one previously described and shown in the appended drawings.

The platform for the landing of an aircraft of the invention allows to exploit a generally little-used area of a boat, such as the prow.

However, the active platform of the invention can be mounted in free areas of a boat which differ from the prow and which, for surface extension, are fit for the purpose, for example at the central bridge or stern.

It is also stated precisely that the active platform for the landing of an aircraft object of the invention can be mounted on an access facility different than that one on which the above description has been based, for the sake of pure illustration: for example, indeed, in other applications, the platform of the invention can be mounted on fixed or mobile off-shore posts for plants of extraction of submarine oil, docks of ports and so on.

In further embodiments, not shown, the active platform claimed herewith could include compensation and levelling means of constructive type and operative mode different from those ones previously described, which does not affect the advantage brought by the present invention.

## Claims

1. Active platform (1) for the landing of an aircraft on an access facility (B) including:
- a support basement (2), suitable to be fixed on a reference surface (P) belonging to said access facility (B) and including:
• a base plate (7) suitable to be fixed to said reference surface (P) of said access facility (B);
• a central frame (8), placed above said base plate (7) with which is coupled through compensation and levelling means (4) and defining a lower plane parallel and spaced apart from said base plate 7);
- a landing footboard (3), superiorly connected with said support basement (2) and suitable to receive said aircraft;
- said compensation and levelling means (4) are operatively connected with moving means (5) so as to constantly keep said landing footboard (3) on a substantially horizontal plane when atmospheric agents, fluid masses and/or adjacent structures interfere with said access facility (B);
**characterized in that** said compensation and levelling means (4) include a pair of main mechanical couplings of the fifth wheel/shaft type, each of which consisting of:
- a first rotation fifth wheel (32) fixed to said base plate (7) through anchoring means (33);
- a first counter-fifth wheel (34), directly facing said first rotation fifth wheel (32), revolvingly coupled at one side with said central frame (8) and at the other side with said first rotation fifth wheel (32) through a first articulation pin (35) suitable to allow the oscillation of said landing footboard (3) around a longitudinal axis (X) passing through the centre of said central frame (8).

2. Platform (1) as claim 1) **characterized in that** said compensation and levelling means (4) and said moving means (5) are coupled with said support basement (2) in order to be below said landing footboard (3).

3. Platform (1) as claim 1) or 2) **characterized in that** said anchoring means (33) comprise a shaped plate (36) projecting orthogonally from said base plate (6) and a pair of reinforcing ribs (37) coupled with the side edges opposite each other of said shaped plate (36).

4. Platform (1) of any of the previous claims **characterized in that** said main mechanical couplings of the fifth wheel/shaft type are mutually opposed and separated by said central frame (8).

5. Platform (1) as any of the previous claims **characterized in that** the oscillation of said landing footboard (3) allowed by the said first articulation pin (35) describes acute angles (α) positive and negative with respect to a reference plane (Π) parallel to said reference surface (P) and dividing into half said central frame (8).

6. Platform (1) as any of the previous claims **characterized in that** said support basement (2) includes a perimetric frame (9) surrounding said central frame (8), with which is coplanar and connected through said compensation and levelling means (4), and provided with a cantilevered peripheral portion (9a).

7. Platform (1) as claim 6) **characterized in that** said compensation and levelling means (4) include a pair of auxiliary mechanical couplings of the fifth wheel/shaft type, each consisting of:
- a second rotation fifth wheel (38) fixed to said perimetric frame (9);
- a second counter-fifth wheel (39), directly facing and opposite to said second fifth wheel (38), revolvingly coupled at one side with said central frame (8) and at the other side with said second fifth wheel (38) through a second articulation pin (40) suitable to allow the oscillation of said landing footboard (3) around a transverse axis (Y) passing through the centre of said central frame (8) orthogonally to said longitudinal axis (X).

8. Platform (1) as claim 7) **characterized in that** said auxiliary mechanical couplings of the fifth wheel/shaft type are mutually opposed and separated by said central frame (8).

9. Platform (1) as claim 7) or 8) **characterized in that** said main mechanical couplings of the fifth wheel/shaft type and said auxiliary mechanical couplings of the fifth wheel/shaft type are equally spaced apart each other according to the vertices of a square.

10. Platform (1) as any of the claims from 7) to 9) **characterized in that** the oscillation of said landing footboard (3) allowed by said second articulation pin (40) describes acute angles (ß) positive and negative with respect to said reference plane (Π).

11. Platform (1) as any of the claims from 6) to 10) **characterized in that** said moving means (5) comprise:
- a pair of first linear actuators (41), symmetrically arranged each other with respect to the centre of said central frame (8), placed between said central frame (8) and said perimetric frame (9) and operatively connected with control means;
- a pair of second linear actuators (42), symmetrically arranged each other with respect to the centre of said central frame (8), placed between said central frame (8) and said perimetric frame (9) and operatively connected with said control means, each of said second linear actuators (42) being facing and cooperating with one of said first linear actuators (41) so as to rotate said landing footboard (3) around said longitudinal axis (X) through said compensation and levelling means (4).

12. Platform (1) as claim 11) **characterized in that** each of said first linear actuators (41) is provided with an outer cylinder (43), constrained to said perimetric frame (9), and a thrust piston (44) constrained to a first support plate (45), coupled with said perimetric frame (9), and a second support plate (46) coupled with said central frame (8) and facing said first support plate (45).

13. Platform (1) as claim 12) **characterized in that** each of said second linear actuators (42) is provided with an outer cylinder (47), constrained to said first (45) and second support plate (46) facing each other, and a thrust piston (48) constrained to said perimetric frame (9) so that the effect of said thrust piston (48) of said second actuators (42) balances the effect of said thrust piston (44) of said first actuators (41) facing and cooperating with said second actuators (42) at two sides of said central frame (8) symmetrically arranged with respect to said longitudinal axis (X).

14. Platform (1) as claim 12) or 13) **characterized in that** said second fifth wheel (38) is interposed between said central frame (8) and said first support plate (45), and said second support plate (46) is interposed between said second counter-fifth wheel (39) and said central frame (8).

15. Platform (1) as any of the claims from 12) to 14) **characterized in that** said thrust piston (44) of said first linear actuators (41) and said outer cylinder (47) of said second linear actuators (42) are constrained to said first (45) and second support plate (46) at the free appendix of said first (45) and second support plate (46), said free appendix being facing and spaced apart from said base plate (7).

16. Platform (1) as any of the claims from 12) to 15) **characterized in that** said thrust piston (48) of said second linear actuators (42) and said outer cylinder (43) of said first linear actuators (41) are constrained to a pair of strike wings (49) facing each other, projecting from an inner block (50) of said perimetric frame (9).

17. Platform (1) as any of the claims from 11) to 16) **characterized in that** said thrust piston (44, 48) of said first (41) and second linear actuators (42) slides along a linear axis (M) oblique to the plane (σ) defined by said base plate (7) and parallel to said longitudinal axis (X) when projected onto said plane (σ) of said base plate (7).

18. Platform (1) as any of the claims from 11) to 17) **characterized in that** said moving means (5) include two thirds linear actuators (51) facing and cooperating each other, symmetrically arranged with respect to said longitudinal axis (X) and coupled at one side with said first central frame (8) and at the other side with said base plate (7) according to said transverse axis (Y) in order to rotate said landing footboard (3) around said transversal axis (Y) through said compensation and levelling means (4).

19. Platform (1) as claim 18) **characterized in that** a first one of said third linear actuators (51) is provided with an outer cylinder (52), constrained to said central frame (8), and a thrust piston (53) constrained to a pair of first brackets (54) facing and spaced apart each other, protruding from said base plate (7) to which are fixed.

20. Platform (1) as claim 18) or 19) **characterized in that** a second one of said third linear actuators (51) is provided with an outer cylinder (55), constrained to a pair of second brackets (56) facing and spaced apart each other, symmetrically arranged to said first brackets (54) with respect to said longitudinal axis (X) and protruding from said base plate (7) to which are fixed, and a thrust piston (57) constrained to said central frame (8) so that the effect of said thrust piston (57) of any of said third actuators (51) balances the effect of said thrust piston (57) of the other of said third actuators (51).

21. Platform (1) as claim 20) **characterized in that** said outer cylinder (52, 55) of said third linear actuators (51) presents a larger bore of said outer cylinder (43) of said first linear actuators (41) and of said outer cylinder (47) of said second linear actuators (42).

22. Platform (1) as any of the claims from 18) to 21) **characterized in that** said third linear actuators (51) are contained within the perimeter of said central frame (8).

23. Platform (1) as any of the claims from 11) to 22) **characterized in that** it comprises detection means, electrically connected with said control means and cooperating with said perimetric frame (9) in order to determine the deviation of said landing footboard (3) from the horizontal position when said atmospheric agents, fluid masses and/or adjacent structures interfere with said access facility (B).

24. Platform (1) as any of the previous claims **characterized in that** it comprises translation means (6), interposed between said support basement (2) and said landing footboard (3) so as to connected them, operatively connected with said landing footboard (3) in order to moving it from/to a rest position, in which said landing footboard (3) re-enters at least partially with respect to said access facility (B) along a vertical axis (Z) orthogonal to the support plane (W) of said access facility (B), remaining arranged under the open sky and accessible to the user, to/from an operating position in which said landing footboard (3) protrudes from said access facility (B) along said vertical axis (Z), becoming available for the landing of said aircraft.

## Patentansprüche

1. Aktive Plattform (1) für die Landung von Fluggeräten auf einer Zugangsanlage (B), umfassend:
- ein Trägergeschoss (2), das geeignet ausgeführt ist, um auf einer Bezugsfläche (P), die zu der Zugangsanlage (B) gehört, befestigt zu werden, und umfassend:
• eine Grundplatte (7), die geeignet ausgeführt ist, um an der Bezugsfläche (P) der Zugangsanlage (B) befestigt zu werden;
• einen zentraler Rahmen (8), der über der Grundplatte (7) angeordnet ist, mit der er über Ausgleichs- und Nivellierungsmittel (4) gekoppelt ist, und der eine untere Ebene festlegt, die parallel und beabstandet zu der Grundplatte (7) ist;
- eine Landeplattform (3), die höherstehend mit dem Trägergeschoss (2) verbunden ist und geeignet ausgeführt ist, um das Fluggerät aufzunehmen;
- die Ausgleichs- und Nivellierungsmittel (4) sind in Wirkverbindung mit Bewegungsmitteln (5) verbunden, um die Landeplattform (3) fortwährend in einer im Wesentlichen horizontalen Ebene zu halten, wenn atmosphärische Einflüsse, Fluidmassen und/oder angrenzende Strukturen störend auf die Zugangsanlage (B) einwirken;
**dadurch gekennzeichnet, dass** die Ausgleichs- und Nivellierungsmittel (4) ein Paar von mechanischen Hauptverbindungseinrichtungen vom Sattelkupplungs-/Wellentyp umfassen, von denen jede enthält:
- ein erstes Drehsattelkupplungsteil (32), das an der Grundplatte (7) über Verankerungsmittel (33) befestigt ist;
- ein erstes Gegensattelkupplungsteil (34), das dem ersten Drehsattelkupplungsteil (32) direkt zugewandt ist, an einer Seite an dem zentralen Rahmen (8) drehbar gekoppelt ist und an der anderen Seite mit dem ersten Drehsattelkupplungsteil (32) über einen ersten Gelenkbolzen (35) drehbar gekoppelt ist, wobei der erste Gelenkbolzen (35) geeignet ausgeführt ist, um die Oszillation der Landeplattform (3) um die Längsachse (X), die durch die Mitte des zentralen Rahmens (8) führt, zu ermöglichen.

2. Plattform (1) nach Anspruch 1, **dadurch gekennzeichnet, dass** die Ausgleichs- und Nivellierungsmittel (4) und die Bewegungsmittel (5) mit dem Trägergeschoss (2) gekoppelt sind, um unterhalb der Landeplattform (3) zu sein.

3. Plattform (1) nach Anspruch 1 oder 2, **dadurch gekennzeichnet, dass** die Verankerungsmittel (33) eine geformte Platte (36), die orthogonal von der Grundplatte (6) hervorsteht, und ein Paar von Verstärkungsrippen (37), die mit zueinander gegenüberliegenden Seitenkanten der geformten Platte (36) gekoppelt sind, umfassen.

4. Plattform (1) nach einem der vorhergehenden Ansprüche, **dadurch gekennzeichnet, dass** die mechanischen Hauptverbindungseinrichtungen vom Sattelkupplungs-/Wellentyp zueinander gegenüberliegend sind und durch den zentralen Rahmen (8) getrennt sind.

5. Plattform (1) nach einem der vorhergehenden Ansprüche, **dadurch gekennzeichnet, dass** die durch den ersten Gelenkbolzen (35) ermöglichte Oszillation der Landeplattform (3) positive und negative spitze Winkel (α) in Bezug auf eine Bezugsebene (Π), die parallel zu der Bezugsfläche (P) ist, beschreibt und den zentralen Rahmen (8) hälftig teilt.

6. Plattform (1) nach einem der vorhergehenden Ansprüche, **dadurch gekennzeichnet, dass** das Trägergeschoss (2) einen Umfangsrahmen (9) umfasst, der den zentralen Rahmen (8) umgibt, zu dem er koplanar ist und mit dem er über die Ausgleichs- und Nivellierungsmittel (4) verbunden ist, und der mit einem freitragenden Umfangsabschnitt (9a) versehen ist.

7. Plattform (1) nach Anspruch 6, **dadurch gekennzeichnet, dass** die Ausgleichs- und Nivellierungsmittel (4) ein Paar von mechanischen Hilfsverbindungseinrichtungen des Sattelkupplungs-/Wellentyps umfassen, von denen jede enthält:
- ein zweites Drehsattelkupplungsteil (38), das an dem Umfangsrahmen (9) befestigt ist;
- ein zweites Gegensattelkupplungsteil (39), das dem zweiten Drehsattelkupplungsteil (38) direkt zugewandt und zu diesem gegenüberliegend ist, das an einer Seite mit dem zentralen Rahmen (8) drehbar gekoppelt ist und an der anderen Seite mit der zweiten Sattelkupplung (38) über einen zweiten Gelenkbolzen (40) drehbar gekoppelt ist, wobei der zweite Gelenkbolzen (40) geeignet ausgeführt ist, um die Oszillation der Landeplattform (3) um eine Querachse (Y), die durch die Mitte des zentralen Rahmens (8) senkrecht zu der Längsachse (X) verläuft, zu ermöglichen.

8. Plattform (1) nach Anspruch 7, **dadurch gekennzeichnet, dass** die mechanischen Hilfsverbindungseinrichtungen des Sattelkupplungs-/Wellentyps zueinander gegenüberliegend und durch den zentralen Rahmen (8) getrennt sind.

9. Plattform (1) nach Anspruch 7 oder 8, **dadurch gekennzeichnet, dass** die mechanischen Hauptverbindungseinrichtungen des Sattelkupplungs-/Wellentyps und die mechanischen Hilfsverbindungseinrichtungen des Sattelkupplungs-/Wellentyps gemäß den Ecken eines Quadrats gleich zueinander beabstandet sind.

10. Plattform (1) nach einem der Ansprüche 7 bis 9, **dadurch gekennzeichnet, dass** die durch den zweiten Gelenkbolzen (40) ermöglichte Oszillation der Landeplattform (3) positive und negative spitze Winkel (β) in Bezug auf die Bezugsebene (Π) beschreibt.

11. Plattform (1) nach einem der Ansprüche 6 bis 10, **dadurch gekennzeichnet, dass** die Bewegungsmittel (5) umfassen:
- ein Paar erster Linearaktuatoren (41), die in Bezug auf die Mitte des zentralen Rahmens (8) symmetrisch zueinander angeordnet sind und die zwischen dem zentralen Rahmen (8) und dem Umfangsrahmen (9) angeordnet sind und in Wirkverbindung mit Steuermitteln stehen;
- ein Paar zweiter Linearaktuatoren (42), die in Bezug auf die Mitte des zentralen Rahmens (8) symmetrisch zueinander angeordnet sind und die zwischen dem zentralen Rahmen (8) und dem Umfangsrahmen (9) angeordnet sind und in Wirkverbindung mit den Steuermitteln stehen, wobei jeder der zweiten Linearaktuatoren (42) einem der ersten Linearaktuatoren (41) zugewandt ist und mit diesem zusammenarbeitet, um die Landeplattform (3) um die Längsachse (X) über die Ausgleichs- und Nivellierungsmittel (4) zu drehen.

12. Plattform (1) nach Anspruch 11, **dadurch gekennzeichnet, dass** jeder der ersten Linearaktuatoren (41) einen an dem Umfangsrahmen (9) befestigten äußeren Zylinder (43) und einen Schubkolben (44), der an einer ersten Halteplatte (45), die mit dem Umfangsrahmen (9) gekoppelt ist, und an einer zweiten Halteplatte (46), die mit dem zentralen Rahmen (8) gekoppelt ist und die der ersten Halteplatte (45) zugewandt ist, befestigt ist, umfasst.

13. Plattform (1) nach Anspruch 12, **dadurch gekennzeichnet, dass** jeder der zweiten Linearaktuatoren (42) einen äußeren Zylinder (47), der an der ersten (45) und der zweiten Halteplatte (46), die zueinander zugewandt sind, befestigt ist, und einen Schubkolben (48), der an dem Umfangsrahmen (9) befestigt ist, umfasst, so dass die Wirkung des Schubkolbens (48) der zweiten Aktuatoren (42) die Wirkung des Schubkolbens (44) der ersten Aktuatoren (41), die den zweiten Aktuatoren (42) zugewandt sind und mit diesen an den beiden Seiten des zentralen Rahmens (8) zusammenarbeiten und symmetrisch in Bezug auf die Längsachse (X) angeordnet sind, ausgleicht.

14. Plattform (1) nach Anspruch 12 oder 13, **dadurch gekennzeichnet, dass** die zweite Sattelkupplung (38) zwischen dem zentralen Rahmen (8) und der ersten Halteplatte (45) angeordnet ist und dass die zweite Halteplatte (46) zwischen der zweiten Sattelkupplung (39) und dem zentralen Rahmen (8) angeordnet ist.

15. Plattform (1) nach einem der Ansprüche 12 bis 14, **dadurch gekennzeichnet, dass** der Schubkolben (44) der ersten Linearaktuatoren (41) und der äußere Zylinder (47) der zweiten Linearaktuatoren (42) an der ersten (45) und der zweiten Halteplatte (46) an dem freien Anhang der ersten (45) und der zweiten Halteplatte (46) befestigt ist, wobei der freie Anhang der Grundplatte (7) zugewandt und davon beabstandet ist.

16. Plattform (1) nach einem der Ansprüche 12 bis 15, **dadurch gekennzeichnet, dass** der Schubkolben (48) der zweiten Linearaktuatoren (42) und der äußere Zylinder (43) der ersten Linearaktuatoren (41) an einem Paar Anschlagsflügel (49) befestigt sind, die einander zugewandt sind und von einem inneren Block (50) des Umfangsrahmens (9) hervorstehen.

17. Plattform (1) nach einem der Ansprüche 11 bis 16, **dadurch gekennzeichnet, dass** der Schubkolben (44, 48) der ersten (41) und zweiten (42) Linearaktuatoren entlang einer Linearachse (M) gleitet, die schräg zu der durch die Grundplatte (7) festgelegte Ebene (σ) ist und die parallel zu der Längsachse (X) ist, wenn diese auf die Ebene (σ) der Grundplatte (7) projiziert ist.

18. Plattform (1) nach einem der Ansprüche 11 bis 17, **dadurch gekennzeichnet, dass** die Bewegungsmittel (5) zwei dritte Linearaktuatoren (51) enthalten, die einander zugewandt sind und zusammenarbeiten, die symmetrisch in Bezug auf die Längsachse (X) angeordnet sind und die an einer Seite mit dem ersten zentralen Rahmen (8) und an der anderen Seite mit der Grundplatte (7) gemäß der Querachse (Y) gekoppelt sind, um die Landeplattform (3) um die Querachse (Y) über die Ausgleichs- und Nivellierungsmittel (4) zu drehen.

19. Plattform (1) nach Anspruch 18, **dadurch gekennzeichnet, dass** ein erster der dritten Linearaktuatoren (51) mit einem äußeren Zylinder (52), der an dem zentralen Rahmen (8) befestigt ist, und mit einem Bewegungskolben (53), der an einem Paar erster Klammern (54), die einander zugewandt und zueinander beabstandet sind und von der Grundplatte (7), an der sie befestigt sind, hervorstehen, befestigt ist, versehen ist.

20. Plattform (1) nach Anspruch 18 oder 19, **dadurch gekennzeichnet, dass** ein zweiter der dritten Linearaktuatoren (51) mit einem äußeren Zylinder (55), der an einem Paar von zweiten Klammern (56), die einander zugewandt und voneinander beabstandet sind, und symmetrisch zu den ersten Klammern (54) in Bezug auf die Längsachse (X) angeordnet sind und von der Grundplatte (7), an der sie befestigt sind, hervorstehen, befestigt ist, und mit einem Bewegungskolben (57), der an dem zentralen Rahmen (8) befestigt ist, versehen ist, so dass die Wirkung des Bewegungskolbens (57) eines der dritten Aktuatoren (51) die Wirkung des Bewegungskolbens (57) des anderen der dritten Aktuatoren (51) ausgleicht.

21. Plattform (1) nach Anspruch 20, **dadurch gekennzeichnet, dass** der äußere Zylinder (52, 55) der dritten Linearaktuatoren (51) eine größere Bohrung des äußeren Zylinders (43) der ersten Linearaktuatoren (41) und des äußeren Zylinders (47) der zweiten Linearaktuatoren (42) darstellt.

22. Plattform (1) nach den Ansprüchen 18 bis 21, **dadurch gekennzeichnet, dass** die dritten Linearaktuatoren (51) innerhalb des Umfangs des zentralen Rahmens (8) enthalten sind.

23. Plattform (1) nach einem der Ansprüche 11 bis 22, **dadurch gekennzeichnet, dass** sie Erfassungsmittel enthält, die elektrisch mit den Steuermitteln verbunden sind und mit dem Umfangsrahmen (9) zusammenwirken, um die Abweichung der Landeplattform (3) von einer horizontalen Position zu bestimmen, wenn atmosphärische Einflüsse, Fluidmassen und/oder angrenzende Strukturen störend auf die Zugangsanlage (B) einwirken.

24. Plattform (1) nach einem der vorhergehenden Ansprüche, **dadurch gekennzeichnet, dass** sie Verschiebungsmittel (6) umfasst, die zwischen dem Trägergeschoss (2) und der Landeplattform (3) angeordnet sind, um sie zu verbinden, und in Wirkverbindung mit der Landeplattform (3) stehen, um sie von/in einer/e Ruheposition, in der die Landeplattform (3) in Bezug auf die Zugangseinrichtung (B) entlang einer vertikalen Achse (Z) senkrecht zu der Stützebene (W) der Zugangsanlange (B) zumindest teilweise wieder eintritt, und dabei unterhalb des offenen Himmels angeordnet und für den Benutzer zugänglich bleibt, in/von eine/r Betriebsposition zu bewegen, in der die Landeplattform (3) von der Zugangsanlage (B) entlang der vertikalen Achse (Z) hervorsteht, um dadurch für die Landung eines Fluggeräts bereit zu sein.

## Revendications

1. Plateforme active (1) pour l'atterrissage d'un aéronef sur une installation d'accès (B), comprenant :
- un socle de support (2), approprié pour être fixé sur une surface de référence (P) appartenant à ladite installation d'accès (B), et comprenant :
• une plaque de base (7) appropriée pour être fixée à ladite surface de référence (P) de ladite installation d'accès (B) ;
• un bâti central (8), disposé au-dessus de ladite plaque de base (7), à laquelle il est couplé par l'intermédiaire de moyens de compensation et de mise à niveau (4), et définissant un plan inférieur parallèle à ladite plaque de base (7) et espacé de celle-ci ;
- un marchepied d'atterrissage (3), relié de façon supérieure audit socle de support (2) et approprié pour recevoir ledit aéronef ;
- lesdits moyens de compensation et de mise à niveau (4) étant reliés de façon fonctionnelle à des moyens de déplacement (5) de façon à maintenir constamment ledit marchepied d'atterrissage (3) dans un plan sensiblement horizontal lorsque des agents atmosphériques, des masses de fluides et/ou des structures adjacentes interfèrent avec ladite installation d'accès (B) ;
**caractérisée en ce que** lesdits moyens de compensation et de mise à niveau (4) comprennent une paire d'accouplements mécaniques principaux du type à sellette roue/arbre, chacun d'entre eux étant constitué par :
- une première sellette de rotation (32) fixée à ladite plaque de base (7) par l'intermédiaire de moyens d'ancrage (33) ;
- une première contre-sellette (34), faisant directement face à ladite première sellette de rotation (32), couplée de façon rotative, d'un côté, avec ledit bâti central (8), et, de l'autre côté, avec ladite première sellette de rotation (32), par l'intermédiaire d'une première broche d'articulation (35) appropriée pour permettre l'oscillation dudit marchepied d'atterrissage (3) autour d'un axe longitudinal (X) traversant le centre dudit bâti central (8).

2. Plateforme (1) selon la revendication 1, **caractérisée en ce que** lesdits moyens de compensation et de mise à niveau (4) et lesdits moyens de déplacement (5) sont couplés audit socle de support (2) de façon à se trouver en dessous dudit marchepied d'atterrissage (3).

3. Plateforme (1) selon l'une des revendications 1 ou 2, **caractérisée en ce que** lesdits moyens d'ancrage (33) comprennent une plaque conformée (36) faisant saillie de façon orthogonale à partir de ladite plaque de base (6) et une paire de nervures de renfort (37) couplées aux bords latéraux mutuellement opposés de ladite plaque conformée (36).

4. Plateforme (1) selon l'une quelconque des revendications précédentes, **caractérisée en ce que** lesdits accouplements mécaniques principaux du type à sellette roue/arbre sont mutuellement opposés et séparés par ledit bâti central (8).

5. Plateforme (1) selon l'une quelconque des revendications précédentes, **caractérisée en ce que** l'oscillation dudit marchepied d'atterrissage (3) autorisée par ladite première broche d'articulation (35) décrit des angles aigus (α) positifs et négatifs par rapport à un plan de référence (Π) parallèle à ladite surface de référence (P), et divisant en moitiés ledit bâti central (8).

6. Plateforme (1) selon l'une quelconque des revendications précédentes, **caractérisée en ce que** ledit socle de support (2) comprend un bâti périphérique (9) entourant ledit bâti central (8), vis-à-vis duquel il est coplanaire et relié par l'intermédiaire desdits moyens de compensation et de mise à niveau (4), et muni d'une partie périphérique en porte-à-faux (9a).

7. Plateforme (1) selon la revendication 6, **caractérisée en ce que** lesdits moyens de compensation et de mise à niveau (4) comprennent une paire d'accouplements mécaniques auxiliaires du type à sellette roue/arbre, constitués chacun par :
- une deuxième sellette de rotation (38) fixée audit bâti périphérique (9) ;
- une deuxième contre-sellette (39), faisant directement face à ladite deuxième sellette (38) et opposée à celle-ci, couplée de façon rotative, d'un côté, avec ledit bâti central (8), et, de l'autre côté, avec ladite deuxième sellette (38), par l'intermédiaire d'une deuxième broche d'articulation (40) appropriée pour permettre l'oscillation dudit marchepied d'atterrissage (3) autour d'un axe transversal (Y) traversant le centre dudit bâti central (8) de façon orthogonale par rapport audit axe longitudinal (X).

8. Plateforme (1) selon la revendication 7, **caractérisée en ce que** lesdits accouplements mécaniques auxiliaires du type à sellette_roue/arbre sont mutuellement opposés et séparés par ledit bâti central (8).

9. Plateforme (1) selon l'une des revendications 7 ou 8, **caractérisée en ce que** lesdits accouplements mécaniques principaux du type à_sellette roue/arbre et lesdits accouplements mécaniques auxiliaires du type à sellette roue/arbre sont espacés de manière égale les uns des autres selon les sommets d'un carré.

10. Plateforme (1) selon l'une quelconque des revendications 7 à 9, **caractérisée en ce que** l'oscillation dudit marchepied d'atterrissage (3) autorisée par ladite deuxième broche d'articulation (40) décrit des angles aigus (β) positifs et négatifs par rapport audit plan de référence (Π).

11. Plateforme (1) selon l'une quelconque des revendications 6 à 10, **caractérisée en ce que** lesdits moyens de déplacement (5) comprennent :
- une paire de premiers actionneurs linéaires (41), disposés de façon symétrique l'un par rapport à l'autre vis-à-vis du centre dudit bâti central (8), positionnés entre ledit bâti central (8) et ledit bâti périphérique (9) et reliés de façon fonctionnelle à des moyens de commande ;
- une paire de deuxièmes actionneurs linéaires (42), disposés de façon symétrique l'un par rapport à l'autre vis-à-vis du centre dudit bâti central (8), positionnés entre ledit bâti central (8) et ledit bâti périphérique (9) et reliés de façon fonctionnelle auxdits moyens de commande, chacun desdits deuxièmes actionneurs linéaires (42) faisant face à l'un desdits premiers actionneurs linéaires (41) et coopérant avec celui-ci de façon à faire tourner ledit marchepied d'atterrissage (3) autour dudit axe longitudinal (X) par l'intermédiaire desdits moyens de compensation et de mise à niveau (4).

12. Plateforme (1) selon la revendication 11, **caractérisée en ce que** chacun desdits premiers actionneurs linéaires (41) est muni d'un cylindre extérieur (43), contraint vis-à-vis dudit bâti périphérique (9), et d'un piston de poussée (44) contraint vis-à-vis d'une première plaque de support (45), couplée audit bâti périphérique (9), et d'une deuxième plaque de support (46) couplée audit bâti central (8) et faisant face à ladite première plaque de support (45).

13. Plateforme (1) selon la revendication 12, **caractérisée en ce que** chacun desdits deuxièmes actionneurs linéaires (42) est muni d'un cylindre extérieur (47), contraint vis-à-vis desdites première (45) et deuxième (46) plaques de support se faisant mutuellement face, et d'un piston de poussée (48) contraint vis-à-vis dudit bâti périphérique (9), de telle sorte que l'effet dudit piston de poussée (48) desdits deuxièmes actionneurs (42) équilibre l'effet dudit piston de poussée (44) desdits premiers actionneurs (41) faisant face auxdits deuxièmes actionneurs (42) et coopérant avec ceux-ci des deux côtés dudit bâti central (8), disposés de façon symétrique par rapport audit axe longitudinal (X).

14. Plateforme (1) selon l'une des revendications 12 ou 13, **caractérisée en ce que** ladite deuxième sellette de rotation (38) est interposée entre ledit bâti central (8) et ladite première plaque de support (45), et **en ce que** ladite deuxième plaque de support (46) est interposée entre ladite deuxième contre-sellette (39) et ledit bâti central (8).

15. Plateforme (1) selon l'une quelconque des revendications 12 à 14, **caractérisée en ce que** ledit piston de poussée (44) desdits premiers actionneurs linéaires (41) et ledit cylindre extérieur (47) desdits deuxièmes actionneurs linéaires (42) sont contraints vis-à-vis desdites première (45) et deuxième (46) plaques de support à l'appendice libre desdites première (45) et deuxième (46) plaques de support, ledit appendice libre faisant face à ladite plaque de base (7) et étant espacé de celle-ci.

16. Plateforme (1) selon l'une quelconque des revendications 12 à 15, **caractérisée en ce que** ledit piston de poussée (48) desdits deuxièmes actionneurs linéaires (42) et ledit cylindre extérieur (43) desdits premiers actionneurs linéaires (41) sont contraints vis-à-vis d'une paire d'ailes d'impact (49) se faisant mutuellement face, faisant saillie à partir d'un bloc intérieur (50) dudit bâti périphérique (9).

17. Plateforme (1) selon l'une quelconque des revendications 11 à 16, **caractérisée en ce que** ledit piston de poussée (44, 48) desdits premier (41) et deuxième (42) actionneurs linéaires coulisse le long d'un axe linéaire (M) oblique par rapport au plan (σ) défini par ladite plaque de base (7) et parallèle audit axe longitudinal (X) lorsqu'il est projeté sur ledit plan (σ) de ladite plaque de base (7).

18. Plateforme (1) selon l'une quelconque des revendications 11 à 17, **caractérisée en ce que** lesdits moyens de déplacement (5) comprennent deux troisièmes actionneurs linéaires (51) se faisant mutuellement face et coopérant l'un avec l'autre, disposés de façon symétrique par rapport audit axe longitudinal (X) et couplés, d'un côté, audit premier bâti central (8), et, de l'autre côté, à ladite plaque de base (7) selon ledit axe transversal (Y), de façon à faire tourner ledit marchepied d'atterrissage (3) autour dudit axe transversal (Y) par l'intermédiaire desdits moyens de compensation et de mise à niveau (4).

19. Plateforme (1) selon la revendication 18, **caractérisée en ce qu'**un premier desdits troisièmes actionneurs linéaires (51) est muni d'un cylindre extérieur (52), contraint vis-à-vis dudit bâti central (8), et d'un piston de poussée (53), contraint vis-à-vis d'une paire de premiers étriers (54) se faisant mutuellement face et espacés l'un de l'autre, faisant saillie à partir de ladite plaque de base (7) à laquelle ils sont fixés.

20. Plateforme (1) selon l'une des revendications 18 ou 19, **caractérisée en ce qu'**un deuxième desdits troisièmes actionneurs linéaires (51) est muni d'un cylindre extérieur (55), contraint vis-à-vis d'une paire de deuxièmes supports (56) se faisant mutuellement face et espacés l'un de l'autre, disposés de façon symétrique par rapport auxdits premiers étriers (54) vis-à-vis dudit axe longitudinal (X) et faisant saillie à partir de ladite plaque de base (7) à laquelle ils sont fixés, et d'un piston de poussée (57) contraint vis-à-vis dudit bâti central (8), de telle sorte que l'effet dudit piston de poussée (57) de l'un quelconque desdits troisièmes actionneurs (51) équilibre l'effet dudit piston de poussée (57) de l'autre desdits troisièmes actionneurs (51).

21. Plateforme (1) selon la revendication 20, **caractérisée en ce que** ledit cylindre extérieur (52, 55) desdits troisièmes actionneurs linéaires (51) présente un alésage plus grand que celui dudit cylindre extérieur (43) desdits premiers actionneurs linéaires (41) et dudit cylindre extérieur (47) desdits deuxièmes actionneurs linéaires (42).

22. Plateforme (1) selon l'une quelconque des revendications 18 à 21, **caractérisée en ce que** lesdits troisièmes actionneurs linéaires (51) sont contenus à l'intérieur du périmètre dudit bâti central (8).

23. Plateforme (1) selon l'une quelconque des revendications 11 à 22, **caractérisée en ce qu'**elle comprend des moyens de détection, électriquement connectés auxdits moyens de commande et coopérant avec ledit bâti périphérique (9) de façon à déterminer l'écart dudit marchepied d'atterrissage (3) par rapport à la position horizontale lorsque lesdits agents atmosphériques, masses de fluides, et/ou structures adjacentes interfèrent avec ladite installation d'accès (B).

24. Plateforme (1) selon l'une quelconque des revendications précédentes, **caractérisée en ce qu'**elle comprend des moyens de translation (6), interposés entre ledit socle de support (2) et ledit marchepied d'atterrissage (3) de façon à relier ceux-ci, reliés de façon fonctionnelle audit marchepied d'atterrissage (3) de façon à déplacer celui-ci depuis/vers une position de repos, dans laquelle ledit marchepied d'atterrissage (3) rentre au moins partiellement vis-à-vis de ladite installation d'accès (B) le long d'un axe vertical (Z) orthogonal au plan de support (W) de ladite installation d'accès (B), restant disposé à ciel ouvert et accessible à l'utilisateur, vers/depuis une position de fonctionnement, dans laquelle ledit marchepied d'atterrissage (3) fait saillie à partir de ladite installation d'accès (B) le long dudit axe vertical (Z), devenant disponible pour l'atterrissage dudit aéronef.
